# EUROPÄISCHE PATENTANMELDUNG

(11) **EP 3 293 221 A1**
(43) Veröffentlichungstag der Anmeldung: **14.03.2018**
(21) Anmeldenummer: 16188617.1
(22) Anmeldetag: 13.09.2016
(51) Int. Cl.: C08J 5/12, B32B 5/32, B32B 27/06, B32B 37/00, B32B 37/04, B29C 65/14, B29C 65/20

(54) **VERFAHREN ZUR HERSTELLUNG BRANDGESCHÜTZTER MEHRLAGIGER THERMOPLASTISCHER SCHAUMSTOFFPLATTEN DURCH THERMISCHES VERSCHWEISSEN**

(71) Anmelder: BASF SE, 67056 Ludwigshafen am Rhein (DE)
(72) Erfinder: SCHERZER, Dietrich, 67056 Ludwigshafen (DE); DIEHLMANN, Tim, 67056 Ludwigshafen (DE); HENN, Rolf, 67056 Ludwigshafen (DE); LICHT, Ulrike, 67056 Ludwigshafen (DE); DIETZEN, Franz-Josef, 67056 Ludwigshafen (DE)
(74) Vertreter: Ellwanger & Baier Patentanwälte Partnerschaftsgesellschaft

(57) **Zusammenfassung**

Die vorliegende Erfindung betrifft ein Verfahren zur Herstellung von zumindest zweilagigen thermoplastischen Schaumstoffplatten durch thermisches Verschweißen von mindestens zwei dünneren thermoplastischen Schaumstoffplatten. Dabei wird auf mindestens einer Oberfläche von mindestens einer dünneren thermoplastischen Schaumstoffplatte eine wässrige Dispersion enthaltend a) mindestens ein Flammschutzmittel, wobei das mindestens eine Flammschutzmittel eine bromierte organische Verbindung ist, und b) mindestens einen Radikalstarter, aufgetragen. Weiterhin betrifft die vorliegende Erfindung die thermoplastischen Schaumstoffplatten als solche, die zumindest zweilagig sind. Die Anzahl der Lagen der thermoplastischen Schaumstoffplatten als solche ergibt sich aus der Anzahl der dünneren thermoplastischen Schaumstoffplatten, die miteinander thermisch verschweißt werden. Wenn beispielsweise drei dünnere thermoplastische Schaumstoffplatten miteinander thermisch verschweißt werden, wird eine dreilagige thermoplastische Schaumstoffplatte als solche erhalten, im Fall von vier dünneren thermoplastischen Schaumstoffplatten ergibt sich demzufolge eine vierlagige thermoplastische Schaumstoffplatte als solche.

## Beschreibung

Die vorliegende Erfindung betrifft ein Verfahren zur Herstellung von zumindest zweilagigen thermoplastischen Schaumstoffplatten durch thermisches Verschweißen von mindestens zwei dünneren thermoplastischen Schaumstoffplatten. Dabei wird auf mindestens einer Oberfläche von mindestens einer dünneren thermoplastischen Schaumstoffplatte eine wässrige Dispersion enthaltend a) mindestens ein Flammschutzmittel, wobei das mindestens eine Flammschutzmittel eine bromierte organische Verbindung ist, und b) mindestens einen Radikalstarter, aufgetragen. Weiterhin betrifft die vorliegende Erfindung die thermoplastischen Schaumstoffplatten als solche, die zumindest zweilagig sind. Die Anzahl der Lagen der thermoplastischen Schaumstoffplatten als solche ergibt sich aus der Anzahl der dünneren thermoplastischen Schaumstoffplatten, die miteinander thermisch verschweißt werden. Wenn beispielsweise drei dünnere thermoplastische Schaumstoffplatten miteinander thermisch verschweißt werden, wird eine dreilagige thermoplastische Schaumstoffplatte als solche erhalten, im Fall von vier dünneren thermoplastischen Schaumstoffplatten ergibt sich demzufolge eine vierlagige thermoplastische Schaumstoffplatte als solche.

Verfahren zur Herstellung beschichteter oder mehrlagiger Schaumstoffplatten sind im Stand der Technik bereits beschrieben.

EP-A 1 318 164 betrifft ein Verfahren zur Herstellung von dicken extrudierten Polystyrol-Schaumstoffplatten (XPS-Platten) durch Verbinden zweier oder mehrerer dünner Platten. Die dicken Platten werden erhalten, indem die dünnen Platten an den Flächen, an denen sie verbunden werden sollen, mit einem organischen Lösungsmittel für Polystyrol gleichmäßig benetzt werden. Dadurch wird die Schaumstoffoberfläche angelöst und die Platten können anschließend miteinander verpresst werden. Als Lösungsmittel eignen sich beispielsweise Kohlenwasserstoffe, Alkohole oder Ether, die einen Siedepunkt zwischen 50 und 250 °C aufweisen. Weiterhin können in dem Verfahren gemäß EP-A 1 318 164 die Schäumhäute an den Hauptflächen der miteinander zu verbindenden Platten geschält werden, bevor sie mit dem Lösungsmittel benetzt werden.

EP-A 1 213 119 offenbart ein Verfahren zur Verbindung von mindestens zwei Ausgangsplatten aus thermoplastischem Kunststoffschaum zu einer neuen Platte, wobei die Ausgangsplatten an den Berührungsflächen extrusionshautlos sind und die Verbindung der Ausgangsplatten durch Quellschweißen erfolgt. Zum Quellschweißen werden organische Lösungsmittel eingesetzt, die einen Siedepunkt < 150°C aufweisen, beispielsweise Aceton oder Gemische von organischen Lösungsmitteln mit Wasser.

EP-A 1 566 400 offenbart Schaumstoffplatten mit einer Beschichtung auf mindestens einer Plattenoberfläche, wobei die Beschichtung einen Polymerfilm, der eine Glasübergangstemperatur im Bereich von -60 bis +40°C aufweist, enthält. Die Schaumstoffplatten können beispielsweise ein Partikelschaum aus Polystyrol oder Polyolefin sein. Der Polymerfilm wird auf den Schaumstoffplatten dadurch erzeugt, dass eine entsprechende Polymerdispersion auf die Schaumstoffplatten aufgetragen wird, die anschließend getrocknet wird. Die Polymerdispersion beziehungsweise der daraus als Beschichtung resultierende Polymerfilm enthält in der Regel ein amorphes, thermoplastisches Polymer, vorzugsweise werden Styrol enthaltende Polymere wie Styrol-Acrylate und Styrol-Butadien-Copolymere eingesetzt. Die Polymerdispersion kann darüber hinaus zahlreiche weitere Stoffe enthalten wie beispielsweise Füllstoffe, Flammschutzmittel oder Infrarot (IR)-absorbierende Feststoffe. Diese Schaumstoffplatten eignen sich zur Haftung von Mörtel- Beton- und Putzsystemen, insbesondere werden sie als Wärmedämmstoff im Bauwesen verwendet. EP-A 1 566 400 offenbart jedoch nicht, dass mehrere einzelne solcher Schaumstoffplatten zu einer mehrlagigen dickeren Schaumstoffplatte zusammengefügt werden können.

Extrudierte Kunststoffschaumplatten von großer Dicke werden in DE-A 101 063 41 offenbart. Mit dem darin beschriebenen Verfahren zur Verbindung von mindestens zwei Ausgangplatten aus Kunststoffschaum zu einer neuen Platte können Platten mit einer Mindestdicke von 70mm hergestellt werden. Vorzugsweise handelt es sich dabei um Fluor-chlor-kohlenwasserstofffreie Polystyrol-Schaumplatten. In dem Verfahren werden die Ausgangsplatten, die an der Berührungsfläche extrusionshautlos sind, miteinander verbunden, indem ein diffusionsoffener Kleber oder mechanische Verbindungselemente verwendet werden. Das Verfahren kann alternativ auch so durchgeführt werden, dass bei teilflächiger Verbindung und stellenweiser Verschweißung oder stellenweiser Verklebung ein nicht diffusionsfähiger Kleber oder nur ein gering diffusionsfähiger Kleber verwendet wird. Als Polystyrol-Schaumplatten eignen sich insbesondere XPS-Platten. In DE-A 101 063 41 sind jedoch keine Angaben enthalten, wie anstelle einer Verklebung die Verschweißung der Ausgangsplatten konkret durchgeführt werden kann, ebenso wenig ist darin offenbart, dass in den verwendeten Klebstoffen weitere Komponenten wie Flammschutzmittel enthalten sein können.

Ein weiteres Verfahren zur Verbindung von mindestens zwei Ausgangsplatten aus Kunststoffschaumplatten zu einer neuen Platte, die vorzugsweise eine Polystyrol-Schaumstoffplatte mit einer Mindestdicke von 70mm ist, wird in EP-A 1 471 125 offenbart. In diesem Verfahren werden ebenfalls Ausgangsplatten verwendet, die zumindest an der Berührungsfläche extrusionshautlos sind, und es erfolgt eine Verbindung der Ausgangsplatten mit einem diffusionsoffenen Kleber, wobei ein Hot-Melt-Kleber und/oder Reaktionskleber verwendet werden. Der Kleber besteht aus Isocyanat und mindestens einer weiteren Reaktionsgruppe, die ein Harz ist, das im schmelzflüssigen Zustand klebrig ist und der Klebeverbindung eine Frühfestigkeit gibt. Das Isocyanat und das Harz reagieren dabei zu Polyurethan, wodurch die Klebewirkung mit einer Endfestigkeit erzielt wird.

Thermische Dämmstoffe aus XPS-Kompositmaterialien, die dreilagig sind, werden in WO 2012/016991 beschrieben. Die Dreilagigkeit der Kompositmaterialien ergibt sich dadurch, dass eine untere, eine zentrale und eine obere XPS-Platte zu dem XPS-Kompositmaterial vereinigt werden, wobei jede nach außen gerichtete Seite dieses XPS-Kompositmaterials eine Extrusionshaut umfasst. Während die Kontaktseiten der zentralen XPS-Platte ebenfalls eine Extrusionshaut aufweisen, wird diese bei den entsprechenden Kontaktseiten der oberen sowie unteren XPS-Platte entfernt. Die einzelnen XPS-Platten werden zum XPS-Kompositmaterial durch thermisches Verschweißen an den Kontaktflächen zusammengefügt. WO 2012/016991 enthält jedoch keine Informationen darüber, ob beim thermischen Verschweißen irgendwelche sonstigen Stoffe auf die zu verschweißenden Oberflächen aufgetragen werden.

WO 2009/047487 offenbart mehrschichtige Kompositmaterialien, die eine erste Schicht aus einem geschlossen porigen Schaum eines Thermoplasten und eine zweite Schicht aus einem faserverstärkten Harz, die auf der Oberfläche der ersten Schicht aufgebracht ist, umfassen. Der geschlossenzellige Schaum hat eine mittlere Zellgröße von weniger als 100 µm, vorzugsweise handelt es sich dabei um eine Mischung aus Polystyrol und Polyphenylenoxid (PS/PPO). Diese schichtförmigen Kompositmaterialien eignen sich zur Herstellung von größeren Strukturen beispielsweise für Rotorblätter von Windkraftanlagen.

EP-A 2 669 072 offenbart ein Verfahren zur Herstellung zumindest zweilagiger thermoplastischer Schaumstoffplatten mittels thermischen Verschweißens von mindestens zwei dünneren thermoplastischen Schaumstoffplatten, wobei auf mindestens einer Oberfläche von mindestens einer dünneren thermoplastischen Schaumstoffplatte mindestens ein Absorber von elektromagnetischer Strahlung aufgetragen wird. Die mindestens eine dünnere thermoplastische Schaumstoffplatte, auf die der Absorber aufgetragen wurde, wird dabei mit elektromagnetischer Strahlung bestrahlt. Durch die Anwesenheit des Absorbers wird beim thermischen Verschweißen unter anderem ein selektives Erhitzen der Oberfläche der dünneren thermoplastischen Schaumstoffplatten bewirkt und das Einbrennen von Löchern reduziert bzw. verhindert.

EP-A 2 923 835 betrifft ein Verfahren zur Herstellung einer zumindest zweilagigen thermoplastischen Schaumstoffplatte durch symmetrisches thermisches Verschweißen der Ausgangsplatten, wodurch ein Aufschüsseln infolge von Wärmeeinwirkung verhindert oder reduziert wird. Bei den Ausgangsplatten handelt es sich vorzugsweise um thermoplastische Extrusionsschaumstoffplatten.

EP-A 268 7 354 offenbart die Herstellung zumindest zweilagiger thermoplastischer Schaumstoffplatten mit einer Schweißnahtdicke von 30 bis 200 µm mittels thermischen Verschweißens von mindestens zwei dünneren thermoplastischen Schaumstoffplatten. Die entsprechende Anzahl an dünneren thermoplastischen Schaumstoffplatten kann damit auf sehr stabile Weise zu der zumindest zweilagigen thermoplastischen Schaumstoffplatte (Produkt) zusammengefügt werden, wobei das erhaltene Produkt gleichzeitig einen verbesserten Flammschutz aufweist.

Die Patentanmeldung EP-A 268 7 353 beschreibt die Herstellung mindestens zweilagiger thermoplastischer Schaumstoffplatten durch thermisches Verschweißen von mindestens zwei dünneren thermoplastischen Schaumstoffplatten, wobei mindestens eine Oberfläche der dünneren thermoplastischen Schaumstoffplatten mit strukturierten Vertiefungen versehen wird. An den Stellen, an denen die Oberfläche der dünneren thermoplastischen Schaumstoffplatte strukturierte Vertiefungen aufweist, wird durch das thermische Verschweißen keine Schweißnaht ausgebildet, was zu einem verbesserten Flammschutz führt.

EP-A 302 4 635 betrifft ein Verfahren zur Herstellung von zumindest zweilagigen thermoplastischen Schaumstoffplatten durch thermisches Verschweißen von mindestens zwei dünneren thermoplastischen Schaumstoffplatten, wobei mindestens zwei Heizelemente auf zueinander versetzten Ebenen zwischen die zu verschweißenden Oberflächen der dünneren thermoplastischen Schaumstoffplatten geführt werden und sich die Schaumstoffplatten und die Heizelemente dabei nicht berühren. Dies hat den Vorteil, dass keine oder nur in sehr geringem Umfang Dellen bzw. Einfallstellen auf den Oberflächen der zu verschweißenden Ausgangsplatten gebildet werden.

Ein grundlegendes Problem beim thermischen Verschweißen ist die Brennbarkeit und das Erfüllen von Brandtests. Selbst wenn man berücksichtigt, dass die zu verschweißenden dünneren Platten nicht oder nur sehr schwer brennbar sind, gilt eine entsprechende Aussage nicht automatisch für das erhaltene Produkt, also die zwei- oder mehrlagigen Platten mit einer (gegenüber den eingesetzten dünneren Ausgangsplatten) größeren Dicke. Dieses unterschiedliche Brandverhalten ist in der Ausbildung der so genannten Schweißnaht während des thermischen Verschweißens begründet. Die Schweißnaht bildet sich an den Stellen aus, an denen die Oberflächen der eingesetzten dünneren Platten thermisch miteinander verschweißt werden. In Abhängigkeit des Vorhandenseins bzw. der Dicke der Schweißnaht werden der Brandtest B2 (gemäß DIN 4102) bzw. der Brandtest E (gemäß DIN EN 13501-1) bestanden oder nicht. Je umfangreicher bzw. dicker die Schweißnaht, desto höher brennen die Flammen. Dieses negative Brandverhalten (gegenüber den dünneren Ausgangsplatten) der zwei- oder mehrlagigen Platten aufgrund des Vorhandenseins einer Schweißnaht wird auch als "Dochteffekt" bezeichnet. Ist hingegen keine Schweißnaht oder nur eine sehr dünne Schweißnaht vorhanden, sind die jeweiligen dünneren Platten nicht fest genug miteinander verbunden, so dass das entsprechende Produkt nicht stabil ist.

Die der vorliegenden Erfindung zugrunde liegende Aufgabe besteht in der Bereitstellung von neuen zwei- oder mehrlagigen thermoplastischen Schaumstoffplatten als solchen bzw. einem entsprechenden Verfahren zur Herstellung von solchen zumindest zweilagigen thermoplastischen Schaumstoffplatten durch thermisches Verschweißen.

Gelöst wird die Aufgabe durch ein Verfahren zur Herstellung von zumindest zweilagigen thermoplastischen Schaumstoffplatten durch thermisches Verschweißen von mindestens zwei dünneren thermoplastischen Schaumstoffplatten zu der zumindest zweilagigen thermoplastischen Schaumstoffplatte, dadurch gekennzeichnet, dass auf mindestens einer Oberfläche von mindestens einer dünneren thermoplastischen Schaumstoffplatte eine wässrige Dispersion, enthaltend
a) mindestens ein Flammschutzmittel, wobei das mindestens eine Flammschutzmittel eine bromierte organische Verbindung ist, und
b) mindestens einen Radikalstarter,

### aufgetragen wird.

Die mit dem erfindungsgemäßen Verfahren hergestellten zumindest zweilagigen thermoplastischen Schaumstoffplatten zeichnen sich dadurch aus, dass die entsprechende Anzahl an dünneren thermoplastischen Schaumstoffplatten auf sehr stabile Weise zu der zumindest zweilagigen thermoplastischen Schaumstoffplatte (Produkt) zusammengefügt werden kann und dass das erhaltene Produkt gleichzeitig auch bei Schweißnähten mit einer Dicke von mehr als 200 µm einen verbesserten Flammschutz aufweist.

Vorzugsweise bestehen die erfindungsgemäßen zumindest zweilagigen thermoplastischen Schaumstoffplatten (als solche) auch bei direkter Beflammung der Schweißnaht den Brandtest B2 (gemäß DIN 4102) sowie den Brandtest Euroklasse E (gemäß DIN EN 13501-1). Dies bedeutet, dass im Rahmen der vorliegenden Erfindung der Dochteffekt, insbesondere beim Brandtest B2, vermieden werden kann, so dass in den erfindungsgemäßen zumindest zweilagigen thermoplastischen Schaumstoffplatten die Schweißnaht der Brandprüfung gemäß Brandtest B2 standhält. Durch das flächige Aufbringen einer wässrigen Dispersion enthaltend mindestens ein Flammschutzmittel und mindestens einen Radikalstarter auf (pro zu verschweißendem Plattenpaar) mindestens eine thermisch zu verschweißende Oberfläche der dünneren thermoplastischen Schaumstoffplatten enthält die Schweißnaht eine hohe Konzentration an Brom und der Dochteffekt wird verhindert. Die zumindest zweilagigen thermoplastischen Schaumstoffplatten als solche weisen weiterhin eine hohe Zugfestigkeit auf, vorzugsweise eine Zugfestigkeit von > 0,15 N/mm².

Ein besonders festes Anhaften der miteinander zu verschweißenden dünneren thermoplastischen Schaumstoffplatten wird im Rahmen des erfindungsgemäßen Verfahrens dann festgestellt, sofern mindestens eine der zu verschweißenden Oberflächen der dünneren thermoplastischen Schaumstoffplatten schäumhautfrei ist. Insbesondere ist dies festzustellen, wenn pro zu verschweißendem Plattenpaar die jeweils thermisch zu verschweißende Oberfläche der beiden dünneren thermoplastischen Schaumstoffplatten schäumhautfrei ist. Schaumstoffplatten mit Schäumhaut weisen eine viel glattere Oberfläche auf, die in aller Regel jedoch nicht planparallel mit der Oberfläche der zu verschweißenden zweiten Platte ist. Demzufolge wird häufig ein Verziehen der Platten beim Verschweißungsvorgang beobachtet, was unter Umständen zu einem reduzierten Zusammenhalt/reduzierten Festigkeit des zumindest zweilagigen thermoplastischen Schaumstoffplattens nach dem thermischen Verschweißen führt.

Ein besonders stabiler Zusammenhalt der einzelnen dünneren thermoplastischen Schaumstoffplatten wird dann erzielt, wenn diese auf Temperaturen oberhalb der Glasübergangstemperatur des verwendeten Thermoplasts erhitzt werden. Vorzugsweise werden die einzelnen dünneren thermoplastischen Schaumstoffplatten anschließend zusätzlich miteinander verpresst. Die mit dem erfindungsgemäßen Verfahren hergestellten zumindest zweilagigen thermoplastischen Schaumstoffplatten, insbesondere diejenigen, bei denen die Oberfläche der Schaumstoffplatten auf Temperaturen oberhalb der Glasübergangstemperatur erhitzt werden, haben als weiteren vorteilhafte Eigenschaft eine hohe Wasserdampfdurchlässigkeit und/oder Festigkeit der miteinander thermisch verschweißten Schaumstoffplatten.

Sofern das erfindungsgemäße Verfahren unter Verwendung eines Absorbers von elektromagnetischer Strahlung durchgeführt wird, wobei der Absorber zusammen mit der wässrigen Dispersion enthaltend mindestens ein Flammschutzmittel und mindestens einen Radikalstarter auf die entsprechenden Oberflächen der dünneren thermoplastischen Schaumstoffplatten, die miteinander thermisch verschweißt werden, aufgetragen wird, ist ein weiterer Vorteil darin zu sehen, dass die Strahlungsdurchlässigkeit der zumindest zweilagigen thermoplastischen Schaumstoffplatten als solche reduziert wird und/oder das Wärmeleitfähigkeitsverhalten verbessert werden kann. Die Wärmeleitfähigkeit kann um bis zu 10 % vermindert werden im Vergleich zu herkömmlichen Platten, bei denen kein Absorber von elektromagnetischer Strahlung verwendet wird. Eine Verminderung der Wärmeleitfähigkeit bedeutet ein (Wärme-) Dämmungseffekt.

Nachfolgend werden die erfindungsgemäß zumindest zweilagigen thermoplastischen Schaumstoffplatten als solche sowie das erfindungsgemäße Herstellungsverfahren dieser Schaumstoffplatten durch thermisches Verschweißen näher definiert.

Die erfindungsgemäße thermoplastische Schaumstoffplatte ist zumindest zweilagig, sie kann also genau zwei Lagen aufweisen oder dreilagig, vierlagig, fünflagig oder noch höher lagig sein. Wie vorstehend bereits ausgeführt, ergibt sich die Anzahl der Lagen der thermoplastischen Schaumstoffplatte als solche aus der Anzahl der dünneren thermoplastischen Schaumstoffplatten, die miteinander thermisch verschweißt werden. Die dünneren thermoplastischen Schaumstoffplatten werden auch als Ausgangsplatten bezeichnet. Im Falle einer zweilagigen thermoplastischen Schaumstoffplatte als solche werden also zwei dünnere thermoplastische Schaumstoffplatten miteinander thermisch verschweißt. Bei einer drei- oder vierlagigen thermoplastischen Schaumstoffplatte als solcher werden somit drei bzw. vier dünnere thermoplastische Schaumstoffplatten miteinander thermisch verschweißt. Sofern noch eine höher lagige thermoplastische Schaumstoffplatte als solche hergestellt werden soll, beispielsweise eine zehnlagige thermoplastische Schaumstoffplatte, müssen demzufolge die der Anzahl der Lagen entsprechende Anzahl an dünneren thermoplastischen Schaumstoffplatten, beispielsweise zehn dünnere thermoplastischen Schaumstoffplatten, miteinander thermisch verschweißt werden. Vorzugsweise ist die erfindungsgemäße thermoplastische Schaumstoffplatte zweilagig, dreilagig oder vierlagig, insbesondere ist die erfindungsgemäße thermoplastische Schaumstoffplatte zweilagig.

Die zum thermischen Verschweißen verwendeten dünneren thermoplastischen Schaumstoffplatten entsprechen hinsichtlich ihrer chemischer Zusammensetzung den im Rahmen des erfindungsgemäßen Verfahrens hergestellten zumindest zweilagigen thermoplastischen Schaumstoffplatten als solchen (ohne Berücksichtigung der im Rahmen des Verschweißungsvorganges auf die Oberflächen aufgebrachten wässrigen Dispersion enthaltend mindestens ein Flammschutzmittel und mindestens einen Radikalstarter bzw. ohne Berücksichtigung der infolge der Ausbildung der Schweißnaht an den entsprechenden Oberflächen auftretenden chemischen Veränderungen/Reaktionen). Die jeweils thermisch miteinander zu verschweißenden dünneren thermoplastischen Schaumstoffplatten weisen vorzugsweise dieselbe Dimensionen und/oder dieselbe chemische Zusammensetzung auf. Gegebenenfalls können aber auch thermoplastische Schaumstoffplatten mit unterschiedlichen Dimensionen und/oder unterschiedlicher chemischer Zusammensetzung miteinander thermisch verschweißt werden. Werden beispielsweise drei dünnere thermoplastische Schaumstoffplatten miteinander thermisch verschweißt, die allesamt die gleiche Dimensionierung aufweisen und (beispielsweise) ein extrudierter Polystyrol-Schaumstoff (XPS-Schaumstoff) sind, wird dadurch ein dreilagiger thermoplastischer extrudierter Polystyrol-Schaumstoff (XPS) erhalten.

Die Dimensionierung der thermisch miteinander zu verschweißenden dünneren thermoplastischen Schaumstoffplatten ist beliebig. Hinsichtlich ihrer Länge und Breite können sie Maße im Zentimeterbereich bis hin zu mehreren Metern aufweisen. Hinsichtlich der dritten Dimension (Dicke) sind theoretisch ebenfalls beliebige Maße denkbar, in der Praxis weisen die dünneren thermoplastischen Schaumstoffplatten eine Dicke von 10 bis 150 mm auf. Die Dicke der im erfindungsgemäßen Verfahren hergestellten zumindest zweilagigen thermoplastischen Schaumstoffplatten ergibt sich somit aus der Gesamt-Dicke der insgesamt eingesetzten dünneren thermoplastischen Schaumstoffplatten (Ausgangsplatten). Aufgrund des thermischen Verschweißens werden die jeweils miteinander zu verschweißenden Oberflächen der Ausgangsplatten zumindest etwas auf- oder angeschmolzen (Aufschmelzschritt), was in Abhängigkeit der zugeführten Wärmemenge zu einer gewissen Reduzierung der Dicke der jeweiligen Ausgangsplatte führen kann. An den Stellen, an denen die Ausgangsplatten miteinander thermisch verschweißt werden, bildet sich eine Schweißnaht aus. Insbesondere wenn im Rahmen des Herstellungsverfahrens ein Verpressungs- und/oder Aufschmelzschritt mit großer Wärmezufuhr durchgeführt wird, ist die Dicke der zumindest zweilagigen thermoplastischen Schaumstoffplatten als solche geringer als die Summe der jeweiligen Dicken der eingesetzten dünneren thermoplastischen Schaumstoffplatten.

Die zum thermischen Verschweißen eingesetzten dünneren thermoplastischen Schaumstoffplatten als solche sind dem Fachmann prinzipiell bekannt. Geeignete thermoplastische Schaumstoffplatten sind beispielsweise in EP-A 1 566 400 oder in Form von Blends in WO 2009/047487 offenbart. Beispielsweise können Platten aus amorphen, kristallinen oder teilkristallinen thermoplastischen Schaumstoffen eingesetzt werden.

Vorzugsweise sind die dünneren thermoplastischen Schaumstoffplatten ein Partikelschaumstoff oder ein Extrusionsschaumstoff. Weiterhin ist es bevorzugt, dass die dünneren thermoplastischen Schaumstoffplatten eine Dichte < 200 g/l aufweisen, bevorzugt eine Dichte von < 100 g/l. Ein bevorzugter Partikelschaumstoff ist Styropor^{®}, das kommerziell von der BASF SE erhältlich ist. Mehr bevorzugt sind die dünneren thermoplastischen Schaumstoffplatten ein Extrusionsschaumstoff. Der Extrusionsschaumstoff ist vorzugsweise ein Polystyrol oder ein aus Styrol hergestelltes Copolymer. Gegebenenfalls können auch Gemische aus solchen Polymeren eingesetzt werden. Besonders bevorzugt ist der Extrusionsschaumstoff extrudiertes Polystyrol (XPS), der beispielsweise unter der Bezeichnung Styrodur® von der BASF SE kommerziell erhältlich ist.

Sofern der Extrusionsschaumstoff auf Basis von (mindestens) einem aus Styrol hergestellten Copolymer ist (auch als Styrolcopolymerisate bezeichnet), bedeutet dies, dass zur Herstellung dieses Copolymeren neben dem Monomeren Styrol mindestens ein weiteres Monomer erforderlich ist. Vorzugsweise wird dieses Copolymer aus Styrol und einem weiteren Monomeren hergestellt. Als Comonomere von Styrol eignen sich prinzipiell alle mit Styrol polymerisierbaren Monomere. Vorzugsweise sind mindestens 50 Gew.-% Styrol in diesem Copolymer einpolymerisiert.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat. Acrylsäureester sowie Methacrylsäureester sind vorzugsweise erhältlich aus Alkoholen mit 1 bis 8 Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS).

Im erfindungsgemäßen Verfahren wird eine wässrige Dispersion enthaltend mindestens ein Flammschutzmittel und mindestens einen Radikalstarter auf mindestens eine Oberfläche von mindestens einer dünneren thermoplastischen Schaumstoffplatte aufgetragen. Vorzugsweise wird pro zu verschweißendem Plattenpaar auf beide thermisch zu verschweißenden Oberflächen der dünneren thermoplastischen Schaumstoffplatten eine wässrige Dispersion enthaltend mindestens ein Flammschutzmittel und mindestens einen Radikalstarter aufgetragen. Das mindestens eine Flammschutzmittel wird dabei vorzugsweise auf beide thermisch zu verschweißende Oberflächen in Mengen von mehr als 1 g/m², besonders bevorzugt von mehr als 3 g/m², ganz besonders bevorzugt von mehr als 5 g/m², aufgetragen. Verfahren zum Auftragen einer wässrigen Dispersion enthaltend mindestens ein Flammschutzmittel und mindestens einen Radikalstarter sind dem Fachmann bekannt, beispielsweise kann die wässrige Dispersion enthaltend mindestens ein Flammschutzmittel und mindestens einen Radikalstarter großflächig auf die entsprechende Oberfläche der dünneren thermoplastischen Schaumstoffplatte aufgetragen werden. Wie nachfolgend aufgeführt kann die wässrige Dispersion enthaltend mindestens ein Flammschutzmittel und mindestens einen Radikalstarter auch zusätzliche Stoffe/Verbindungen mit speziellen Verwendungseigenschaften, beispielsweise Absorber von elektromagnetischer Strahlung, enthalten. Das Auftragen auf die Plattenoberfläche kann beispielsweise durch Pinseln, Walzen oder Sprühen erfolgen.

Flammschutzmittel als solche sind dem Fachmann bekannt. Das mindestens eine Flammschutzmittel im Rahmen der vorliegenden Erfindung ist bevorzugt ausgewählt aus bromierten organischen Verbindungen wie Ethylen-bis-tetrabrom-phthalimid, Tris(2,3-dibromo-isopropyl)isocyanurat, Tetrabrombisphenol-S, Tetrabrombisphenol-A, Decabromdiphenyloxid, Tetrabromphthalsäurediol, Hexabromcyclododekan oder bromierten Styrol-Copolymerisaten. Bromierte Polystyrole sind kommerziell erhältlich, beispielsweise "Emerald Innovation 3000" von Chemtura. Besonders bevorzugt ist das mindestens eine Flammschutzmittel ausgewählt aus bromierten organischen Verbindungen mit aromatischem Rest.

Der Begriff "organische Verbindung", wie er im Rahmen der vorliegenden Erfindung verwendet wird, bezeichnet eine molekulare Verbindung, in der Kohlenstoff in Verbindung mit Wasserstoff enthalten ist. Eine "bromierte organische Verbindung" im Zusammenhang mit der vorliegenden Erfindung ist demnach eine molekulare Verbindung, die neben Kohlenstoff und Wasserstoff zusätzlich mindestens ein Bromatom enthält.

Der Begriff "organische Verbindung mit aromatischem Rest", wie er im Rahmen dieser Anmeldung verwendet wird, bezeichnet eine organische Verbindung, die mindestens einen Strukturbaustein aus einem aromatischen Ringsystem sowie mindestens einen nicht-aromatischen Strukturbaustein besitzt.

Bei den bromierten organischen Verbindungen mit aromatischem Rest handelt es sich vorzugsweise um bromierte Bisphenole oder bromierte Styrol-Copolymerisate.

In einer ganz besonders bevorzugten Ausführungsform ist das mindestens eine Flammschutzmittel ausgewählt aus Tetrabrombisphenol-S, Tetrabrombisphenol-A oder bromierten Butadien-Styrol-Copolymerisaten.

Die Gesamtmenge an dem mindestens einen Flammschutzmittel bezogen auf die Gesamtmenge der wässrigen Dispersion beträgt vorzugsweise 5 bis 70 Gew.-%, besonders bevorzugt 30 bis 65 Gew.-%, ganz besonders bevorzugt 40 bis 60 Gew.-%.

Sofern die wässrige Dispersion enthaltend mindestens ein Flammschutzmittel und mindestens einen Radikalstarter keinen Absorber von elektromagnetischer Strahlung enthält, beträgt die Gesamtmenge an dem mindestens einen Flammschutzmittel vorzugsweise ≥ 10 Gew.-% bezogen auf die Gesamtmenge der wässrigen Dispersion.

Die wässrige Dispersion enthält neben dem mindestens einen Flammschutzmittel mindestens einen Radikalstarter.

Radikalstarter als solche sind dem Fachmann bekannt. Bei dem mindestens einen Radikalstarter im Rahmen der vorliegenden Erfindung handelt es sich bevorzugt um Dicumylperoxid, 2,3-Dimethyl-2,3-diphenylbutan, Poly-1,4-diisopropylbenzen, 1,10-bis(2,2,6,6-tetramethyl-4piperidinyl)ester, Bis(2,2,6,6-tetramethyl-1-piperidinyloxy-4-yl)sebacat, N,N-dioctadecylhydroxylamin oder 4-Hydroxy-2,2,6,6-tetramethylpiperidin 1-oxyl, besonders bevorzugt um Dicumylperoxid oder 2,3-Dimethyl-2,3-diphenylbutan.

2,3-Dimethyl-2,3-diphenylbutan ist auch unter dem Synonym "Dicumyl" bekannt.

Vorzugsweise beträgt die Gesamtmenge an dem mindestens einen Radikalstarter bezogen auf die Gesamtmenge der wässrigen Dispersion 0,1 bis 5 Gew.-%, besonders bevorzugt 0,3 bis 4 Gew.-%, ganz besonders bevorzugt 0,5 bis 3 Gew.-%.

Weiterhin können die erfindungsgemäßen thermoplastischen Schaumstoffplatten mindestens einen Absorber von elektromagnetischer Strahlung (im nachfolgenden Text auch als "Absorber" bezeichnet) enthalten. Vorzugsweise wird der mindestens eine Absorber von elektromagnetischer Strahlung der wässrigen Dispersion enthaltend mindestens ein Flammschutzmittel und mindestens einen Radikalstarter zugegeben.

Absorber von elektromagnetischer Strahlung als solche sind dem Fachmann bekannt. Geeignete Suszeptoren für Radiofrequenz Strahlung sind in WO 2006/050013, WO 99/47621 und WO 012/1725 beschrieben. Bevorzugte Suszeptoren sind polymere lonomere.

Absorber von anderen Strahlungsarten sind beispielsweise in WO 2009/071499 auf den Seiten 9 bis 11 beschrieben. Vorzugsweise wird im Rahmen der vorliegenden Erfindung der Absorber von elektromagnetischer Strahlung in Abhängigkeit von der zum thermischen Verschweißen verwendeten elektromagnetischen Strahlung ausgewählt. Erfolgt beispielsweise das thermische Verschweißen unter Verwendung von Mikrowellen-Strahlen, wird vorzugsweise ein Absorber von elektromagnetischer Strahlung ausgewählt, der über eine gute Absorptionsfähigkeit im Wellenlängenbereich von Mikrowellen verfügt.

Geeignete Absorber sind beispielsweise organische IR-Absorber, organische Mikrowellen-Absorber, anorganische IR-Absorber oder anorganische Mikrowellen-Absorber.

Unter IR-Absorber ist im Rahmen dieser Anmeldung eine Verbindung zu verstehen, die aufgebracht in einer Schichtdicke von < 50 µm bei mindestens einer Wellenlänge von Strahlung des Wellenlängenbereichs von 700 nm bis 1000 µm eine Absorption ≥90 % zeigt. Bevorzugt ist der Wellenlängenbereich von >700 nm bis 20 µm, sowie die Wellenlängen 9,6 µm und 10,6 µm.

Unter Mikrowellen-Absorber ist im Rahmen dieser Anmeldung eine Verbindung zu verstehen, die Mikrowellen des Wellenlängenbereichs von > 1 mm bis 1 m absorbiert. Besonders bevorzugt werden die technisch relevanten Frequenzen von 2,45 Ghz, 433-444 MHz und 902-928 MHz.

Vorzugsweise ist der Absorber von elektromagnetischer Strahlung ein Infrarot (IR)-Absorber und/oder Mikrowellen Absorber, insbesondere Graphit oder Ruß. Weiterhin ist es bevorzugt, dass die elektromagnetische Strahlung IR-Strahlen und/oder Mikrowellen-Strahlen sind.

Sofern der wässrigen Dispersion enthaltend mindestens ein Flammschutzmittel und mindestens einen Radikalstarter mindestens 5 Gew.-% mindestens eines Absorbers elektromagnetischer Strahlung zugesetzt werden, beträgt die Gesamtmenge an dem mindestens einen Flammschutzmittel vorzugsweise ≥ 5 Gew.-% bezogen auf die Gesamtmenge der wässrigen Dispersion.

Wie vorstehend bereits erwähnt, können außer dem Flammschutzmittel, dem Radikalstarter und/oder dem Absorber von elektromagnetischer Strahlung auch weitere Stoffe mit anderen Verwendungseigenschaften auf die zu verschweißende Oberfläche der entsprechenden dünneren thermoplastischen Schaumstoffplatten aufgetragen werden. Geeignete weitere Stoffe können beispielsweise Bindemittel, pH-Regulatoren sowie gegebenenfalls Lösungsmittel sein. Bindemittel, pH-Regulatoren sowie Lösungsmittel als solche sind dem Fachmann bekannt.

Die Durchführung des thermischen Verschweißens als solchem ist dem Fachmann bekannt. Der Effekt des thermischen Verschweißens wird bei den zu verschweißenden Oberflächen erzielt, indem die jeweiligen Oberflächen einer Wärmequelle ausgesetzt werden. Die entsprechenden Wärmequellen oder Vorrichtungen sind dem Fachmann bekannt. Vorzugsweise wird das thermische Verschweißen mit einer Vorrichtung ausgewählt aus einem Heizschwert, einem Heizgitter oder einer Heizplatte durchgeführt, wobei die Vorrichtung gegebenenfalls mit Noppen oder Rillen versehen sein kann. Beispielsweise kann das thermische Verschweißen kontinuierlich unter Verwendung eines Heizschwerts durchgeführt werden, ebenso kann ein Spiegelschweißverfahren unter Verwendung einer Heizplatte oder eines Heizgitters durchgeführt werden. Sofern die entsprechende Vorrichtung zum thermischen Verschweißen Noppen oder Rillen aufweist, können auf diese Weise strukturierte Vertiefungen auf die entsprechende Oberfläche der thermisch zu verschweißenden dünneren thermoplastischen Schaumstoffplatten aufgebracht werden. Anstelle der Verwendung einer Vorrichtung wie die eines Heizschwerts oder eines Heizgitters ist es im Rahmen der vorliegenden Erfindung auch möglich, dass das thermische Verschweißen, also die Wärmezufuhr, unter Verwendung von elektromagnetischer Strahlung teilweise oder vollständig durchgeführt wird (siehe auch weiter unten im Text). Ebenso ist es denkbar, dass im Anschluss an das thermische Verschweißen mittels eines Heizschwerts oder eines Heizgitters ein zusätzlicher Verschweißschritt unter Verwendung von elektromagnetischer Strahlung nachgeschaltet ist.

Durch das thermische Verschweißen bildet sich zwischen den zu verschweißenden Oberflächen eine Schweißnaht aus. Anstelle des Begriffs "Schweißnaht" können auch die Begriffe "Schweißhaut" oder "Schweißzone" verwendet werden. An den Stellen, wo sich eine Schweißnaht ausbildet, kann die Schweißnaht eine beliebige Dicke annehmen, vorzugsweise beträgt sie zwischen 200 und 400 µm (Durchschnittswert verteilt über mindestens fünf Messpunkte, die durch Lichtmikroskopie bestimmt werden), mehr bevorzugt zwischen 200 und 350 µm, insbesondere zwischen 200 und 300 µm. Vorzugsweise erfolgt der Verschweißungsvorgang über einen Zeitraum von maximal 10 Sekunden (bezogen auf die jeweiligen Stellen einer Oberfläche, auf die Energie zugeführt wird).

Das thermische Verschweißen wird erfindungsgemäß bei Temperaturen von 150°C bis 400 °C durchgeführt, wobei vorzugsweise auf Temperaturen oberhalb der Glasübergangstemperatur und/oder Schmelztemperatur der thermoplastischen Schaumstoffplatte erhitzt wird. Vorzugsweise wird das thermische Verschweißen bei Temperaturen von 50 bis 300 °C oberhalb der Glasübergangstemperatur bei amorphen thermoplastischen Schaumstoffen oder von 50 bis 100 °C oberhalb der Schmelztemperatur bei teilkristallinen thermoplastischen Schaumstoffen durchgeführt.

Beim thermischen Verschweißen der mindestens zwei dünneren thermoplastischen Schaumstoffplatten, auf deren Oberfläche eine wässrige Dispersion enthaltend mindestens ein Flammschutzmittel und mindestens einen Radikalstarter aufgetragen wurde, wird mindestens eine Schweißnaht ausgebildet, die vorzugsweise einen Bromgehalt von 0,4 bis 4 Gew.-% bezogen auf die Gesamtmasse der Schweißnaht aufweist, besonders bevorzugt von 0,5 bis 3 Gew.-%.

In einer Ausführungsform der vorliegenden Erfindung erfolgt das thermische Verschweißen in Gegenwart von mindestens einem Absorber von elektromagnetischer Strahlung. Hierzu wird der Absorber von elektromagnetischer Strahlung der wässrigen Dispersion enthaltend mindestens ein Flammschutzmittel und mindestens einen Radikalstarter zugegeben.

In einer bevorzugten Ausführungsform der vorliegenden Erfindung wird die wässrige Dispersion enthaltend mindestens ein Flammschutzmittel und mindestens einen Radikalstarter auf mindestens eine Oberfläche von mindestens einer dünneren thermoplastischen Schaumstoffplatte aufgetragen, wobei die mindestens eine Oberfläche schäumhautfrei ist. Der Vollständigkeit halber wird darauf hingewiesen, dass bei Verwendung eines Extrusionsschaumstoffes die entsprechende Oberfläche auch als extrusionshautfrei anstelle von schäumhautfrei bezeichnet wird.

Unter dem Begriff "schäumhautfrei" wird im Rahmen der vorliegenden Erfindung verstanden, dass die beim Herstellungsprozess der jeweiligen thermoplastischen Schaumstoffplatte entstandene Schäumhaut beispielsweise durch Hobeln oder Fräsen wieder entfernt wird.

In einer weiteren bevorzugten Ausführungsform der vorliegenden Erfindung wird das Verfahren so durchgeführt, dass jede thermisch zu verschweißende Oberfläche der dünneren thermoplastischen Schaumstoffplatten schäumhautfrei ist.

Weiterhin ist es bevorzugt, dass in dem erfindungsgemäßen Verfahren ein Verpressen der thermisch zu verschweißenden zusammengefügten dünnen thermoplastischen Schaumstoffplatten durchgeführt wird. Das Verpressen erfolgt im Allgemeinen im Sekunden- bis Minutenbereich und/oder bei einem Pressdruck von 0,1 bis 1 bar. Das Verpressen erfolgt vorzugsweise nach dem thermischen Verschweißen.

Weiterhin ist es bevorzugt, dass in dem erfindungsgemäßen Verfahren ein Trocknungsschritt durchgeführt wird, nachdem die wässrige Dispersion enthaltend mindestens ein Flammschutzmittel und mindestens einen Radikalstarter auf die Oberfläche der dünneren thermoplastischen Schaumstoffplatten aufgetragen wurde. Das Trocknen findet normalerweise für eine Dauer von 10 Minuten bis 2 Stunden und/oder bei einer Temperatur im Bereich von 50 bis 100°C statt.

In einer weiteren bevorzugten Ausführungsform in der vorliegenden Erfindung umfasst das Verfahren die folgenden Schritte:
a) Bereitstellen von mindestens zwei dünneren thermoplastischen Schaumstoffplatten, wobei jede thermisch zu verschweißende Oberfläche der dünneren thermoplastischen Schaumstoffplatten schäumhautfrei ist,
b) flächiges Aufbringen einer wässrigen Dispersion enthaltend mindestens ein Flammschutzmittel und mindestens einen Radikalstarter auf (pro zu verschweißendem Plattenpaar) mindestens eine thermisch zu verschweißende Oberfläche der dünneren thermoplastischen Schaumstoffplatten, wobei das mindestens eine Flammschutzmittel eine bromierte organische Verbindung ist,
c) Trocknen der dünneren thermoplastischen Schaumstoffplatten, die in Schritt b) erhalten wurden,
d) Thermisches Verschweißen der getrockneten dünneren thermoplastischen Schaumstoffplatten unter Erhalt einer zumindest zweilagigen thermoplastischen Schaumstoffplatte.

Ein weiterer Gegenstand der vorliegenden Erfindung sind die thermoplastischen Schaumstoffplatten als solche, die zumindest zweilagig sind und nach dem vorstehend beschriebenen Verfahren herstellbar sind.

Nachfolgend wird die Erfindung anhand von Beispielen verdeutlicht.

Soweit nicht anders angegeben, sind alle Prozentangaben in Gewichtsprozent (Gew.-%).

Es wird untersucht, ob das Aufbringen einer Flammschutzdispersion auf die zu verschweißenden Oberflächen eines Polystyrolschaums zu einer Verbesserung des Brandverhaltens führt.
Dazu wird eine wässrige Dispersion (GK 10201/3749, GMD/T) hergestellt, die Emerald (bromierte Polystyrole) und Dicumyl (2,3-Dimethyl-2,3-diphenylbutan) im Verhältnis 4/1 enthält. Die Dispersion hat einen Feststoffgehalt von 27,4 %.

Von der Dispersion wurden ca. 50 g pro Quadratmeter auf beide Plattenseiten aufgebracht.

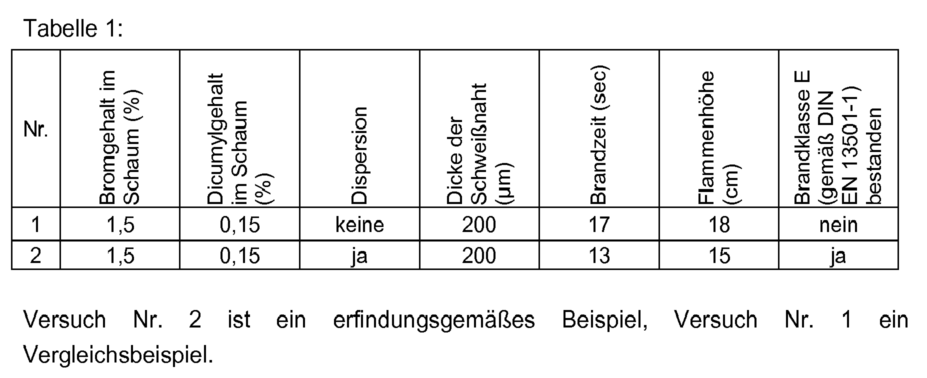

Aus Tabelle 1 ist ersichtlich, dass durch den Auftrag einer wässrigen Dispersion, die bromierte Polystyrole und Dicumyl enthält, der Brandtest E gemäß DIN EN 13501-1 bestanden wird (Nr. 2). Ohne den Auftrag der wässrigen Dispersion wird der Brandtest E nicht bestanden (Nr. 1).

## Patentansprüche

1. Verfahren zur Herstellung von zumindest zweilagigen thermoplastischen Schaumstoffplatten durch thermisches Verschweißen von mindestens zwei dünneren thermoplastischen Schaumstoffplatten zu der zumindest zweilagigen thermoplastischen Schaumstoffplatte, **dadurch gekennzeichnet, dass** auf mindestens einer Oberfläche von mindestens einer dünneren thermoplastischen Schaumstoffplatte eine wässrige Dispersion, enthaltend
a) mindestens ein Flammschutzmittel, wobei das mindestens eine Flammschutzmittel eine bromierte organische Verbindung ist, und
b) mindestens einen Radikalstarter,
aufgetragen wird.

2. Verfahren gemäß Anspruch 1, **dadurch gekennzeichnet, dass** das mindestens eine Flammschutzmittel eine bromierte organische Verbindung mit aromatischem Rest ist, bevorzugt ein bromiertes Bisphenol oder ein bromiertes Styrol-Copolymerisat, ganz besonders bevorzugt Tetrabrombisphenol-S, Tetrabrombisphenol-A oder ein bromiertes Butadien-Styrol-Copolymerisat.

3. Verfahren gemäß Anspruch 1 oder 2, **dadurch gekennzeichnet, dass** die Gesamtmenge an dem mindestens einen Flammschutzmittel 5 bis 70 Gew.-%, bevorzugt 30 bis 65 Gew.-%, besonders bevorzugt 40 bis 60 Gew.-%, bezogen auf die Gesamtmenge der wässrigen Dispersion, beträgt.

4. Verfahren gemäß einem der Ansprüche 1 bis 3, **dadurch gekennzeichnet, dass** es sich bei dem mindestens einen Radikalstarter um Dicumylperoxid, 2,3-Dimethyl-2,3-diphenylbutan, Poly-1,4-diisopropylbenzen, 1,10-bis(2,2,6,6-tetramethyl-4-piperidinyl)ester, Bis(2,2,6,6-tetramethyl-1-piperidinyloxy-4-yl)sebacat, N,N-dioctadecylhydroxylamin oder 4-Hydroxy-2,2,6,6-tetramethylpiperidin 1-oxyl handelt, bevorzugt um Dicumylperoxid oder 2,3-Dimethyl-2,3-diphenylbutan.

5. Verfahren gemäß einem der Ansprüche 1 bis 4, **dadurch gekennzeichnet, dass** die Gesamtmenge an dem mindestens einen Radikalstarter 0,1 bis 5 Gew.-%, bevorzugt 0,3 bis 4 Gew.-%, besonders bevorzugt 0,5 bis 3 Gew.-%, bezogen auf die Gesamtmenge der wässrigen Dispersion, beträgt.

6. Verfahren gemäß einem der Ansprüche 1 bis 5, **dadurch gekennzeichnet, dass** die wässrige Dispersion, enthaltend mindestens ein Flammschutzmittel und mindestens einen Radikalstarter, zusätzlich mindestens einen Absorber von elektromagnetischer Strahlung enthält.

7. Verfahren gemäß einem der Ansprüche 1 bis 6, **dadurch gekennzeichnet, dass** die Gesamtmenge an dem mindestens einen Flammschutzmittel in der wässrigen Dispersion, enthaltend mindestens ein Flammschutzmittel und mindestens einen Radikalstarter,
a) ≥ 10 Gew.-% bezogen auf die Gesamtmenge der wässrigen Dispersion beträgt, sofern die wässrige Dispersion keinen Absorber von elektromagnetischer Strahlung enthält, oder
b) ≥ 5 Gew.-% bezogen auf die Gesamtmenge der wässrigen Dispersion beträgt, sofern die wässrige Dispersion zusätzlich mindestens einen Absorber von elektromagnetischer Strahlung enthält.

8. Verfahren gemäß einem der Ansprüche 1 bis 7, **dadurch gekennzeichnet, dass** die wässrige Dispersion enthaltend mindestens ein Flammschutzmittel und mindestens einen Radikalstarter auf mindestens eine Oberfläche von mindestens einer dünneren thermoplastischen Schaumstoffplatte aufgebracht wird, wobei die mindestens eine Oberfläche schäumhautfrei ist.

9. Verfahren gemäß einem der Ansprüche 1 bis 8, **dadurch gekennzeichnet, dass** jede thermisch zu verschweißende Oberfläche der dünneren thermoplastischen Schaumstoffplatten schäumhautfrei ist und/oder dass pro zu verschweißendem Plattenpaar auf vorzugsweise beide thermisch zu verschweißenden Oberflächen der dünneren thermoplastischen Schaumstoffplatten eine wässrige Dispersion enthaltend mindestens ein Flammschutzmittel und mindestens einen Radikalstarter aufgebracht wird.

10. Verfahren gemäß einem der Ansprüche 1 bis 9, **dadurch gekennzeichnet, dass** die dünnere thermoplastische Schaumstoffplatte ein Partikelschaumstoff oder ein Extrusionsschaumstoff ist, vorzugsweise ein Extrusionsschaumstoff von Polystyrol oder von einem aus Styrol hergestellten Copolymer.

11. Verfahren gemäß einem der Ansprüche 1 bis 10 umfassend die folgenden Schritte
a) Bereitstellen von mindestens zwei dünneren thermoplastischen Schaumstoffplatten, wobei jede thermisch zu verschweißende Oberfläche der dünneren thermoplastischen Schaumstoffplatten schäumhautfrei ist,
b) flächiges Aufbringen einer wässrigen Dispersion enthaltend mindestens ein Flammschutzmittel und mindestens einen Radikalstarter auf (pro zu verschweißendem Plattenpaar) mindestens eine thermisch zu verschweißende Oberfläche der dünneren thermoplastischen Schaumstoffplatten, wobei das mindestens eine Flammschutzmittel eine bromierte organische Verbindung ist,
c) Trocknen der dünneren thermoplastischen Schaumstoffplatten, die in Schritt b) erhalten wurden,
d) Thermisches Verschweißen der getrockneten dünneren thermoplastischen Schaumstoffplatten unter Erhalt einer zumindest zweilagigen thermoplastischen Schaumstoffplatte.

12. Verfahren gemäß einem der Ansprüche 1 bis 11, **dadurch gekennzeichnet, dass** nach dem thermischen Verschweißen ein Verpressen der zumindest zweilagigen thermoplastischen Schaumstoffplatte durchgeführt wird.

13. Verfahren gemäß einem der Ansprüche 1 bis 12, **dadurch gekennzeichnet, dass** beim thermischen Verschweißen der mindestens zwei dünneren thermoplastischen Schaumstoffplatten mindestens eine Schweißnaht ausgebildet wird, die einen Bromgehalt von 0,4 bis 4 Gew.-%, bevorzugt von 0,5 bis 3 Gew.-%, bezogen auf die Gesamtmasse der Schweißnaht, aufweist.

14. Verfahren gemäß Anspruch 13, **dadurch gekennzeichnet, dass** die mindestens eine Schweißnaht eine Dicke von 200 bis 400 µm, bevorzugt von 200 bis 350 µm, mehr bevorzugt von 200 bis 300 µm, aufweist.

15. Thermoplastische Schaumstoffplatte, die zumindest zweilagig ist, herstellbar nach einem Verfahren gemäß einem der Ansprüche 1 bis 14.
